# EUROPEAN PATENT APPLICATION

(11) **EP 3 796 701 A1**
(43) Date of publication of application: **24.03.2021**
(21) Application number: 19198012.7
(22) Date of filing: 18.09.2019
(51) Int. Cl.: H04W 24/10, H04W 24/02, H04W 84/18

(54) **OPTIMIZATION OF WIRELESS ACCESS POINT PARAMETERS BASED ON CLUSTERING LOGIC**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A method of assessing performance of a wireless telecommunications network (100), the wireless telecommunications network comprising at least one wireless access point (110), the method comprising the steps of: defining an array (200) corresponding to an area (140) that is served by the at least one wireless access point, wherein said array is formed of a plurality of unit areas (210); configuring the at least one wireless access point according to a first set of parameters; receiving a first measurement of performance of the wireless network configured according to the first set of parameters; identifying a first unit area (210-2) of the array in which the first measurement is performed; configuring the at least one wireless access point according to a second set of parameters; receiving a second measurement of performance of the wireless network configured according to the second set of parameters; identifying a second unit area (210-2) of the array in which the first measurement is performed, wherein the second unit area is different to the first unit area; identifying an absence of a measurement of performance of the wireless network configured according to the first set of parameters in the second unit area; identifying an absence of a measurement of performance of the wireless network configured according to the second set of parameters at the first unit area; grouping the first unit area with an adjacent unit area so as to form a cluster (220-1), and iteratively performing said grouping until the cluster is contiguous with the second unit area; grouping the second unit area with the cluster, thereby to form a complete cluster (220-3-2) when the complete cluster comprises at least one measurement for the first and the second sets of parameters; and inputting the complete cluster into an optimisation function so as to identify a set of parameters for providing improved performance of the at least one wireless access point for the area that corresponds to the complete cluster.

## Description

### Field of Invention

The present invention relates to a method of assessing performance of a wireless telecommunications network, and in particular of a cellular wide area radio network, as well as to an apparatus therefor.

### Background

Field Drive Tests (FDTs) are an important tool for Mobile Network Operators (MNOs) to identify the performance of a radio network, whereby performance (e.g. signal level) of the radio access network is measured at different locations across a given area.

A FDT may be used to identify performance of a radio access point (or points) having a given Cell Configuration (CC). By performing a plurality of these FDTs, each for different CCs, an optimal configuration for a radio access network may be identified. Different CCs might include varying antenna radiation pattern, mechanical height and/or azimuth, and signal power. More generally, any parameter that affects performance of a radio access network may be deemed a CC parameter
However, the efficacy of the data from FDTs for determining an optimal CC may be limited by having an insufficient number, or poor geographic distribution, of readings from the FDT, or having an excessive number of variables.

It is therefore an aim of the present invention to at least alleviate some of the aforementioned problems.

### Statements of Invention

According to a first aspect of the invention, there is provided a method of assessing performance of a wireless telecommunications network, the wireless telecommunications network comprising at least one wireless access point, the method comprising the steps of: defining an array corresponding to an area that is served by the at least one wireless access point, wherein said array is formed of a plurality of unit areas; configuring the at least one wireless access point according to a first set of parameters; receiving a first measurement of performance of the wireless network configured according to the first set of parameters; identifying a first unit area of the array in which the first measurement is performed; configuring the at least one wireless access point according to a second set of parameters; receiving a second measurement of performance of the wireless network configured according to the second set of parameters; identifying a second unit area of the array in which the first measurement is performed, wherein the second unit area is different to the first unit area; identifying an absence of a measurement of performance of the wireless network configured according to the first set of parameters in the second unit area; identifying an absence of a measurement of performance of the wireless network configured according to the second set of parameters at the first unit area; grouping the first unit area with an adjacent unit area so as to form a cluster, and iteratively performing said grouping until the cluster is contiguous with the second unit area; grouping the second unit area with the cluster, thereby to form a complete cluster when the complete cluster comprises at least one measurement for the first and the second sets of parameters; and inputting the complete cluster into an optimisation function so as to identify a set of parameters for providing improved performance of the at least one wireless access point for the area that corresponds to the complete cluster.

Optionally, the set of parameters for providing improved performance is the first or second set of parameters. Optionally, the set of parameters for providing improved performance is a combination of the first and the second set of parameters.

Preferably, a plurality of first measurements and/or second measurements are received, and wherein the method is performed for each of the first measurements and/or the second measurements. Each unit area of the array that comprises a first measurement may be a first unit area, and each unit area of the array that comprises a second measurement may be a second unit area. Optionally, the plurality of first and/or second measurements are identified to be associated with different first and/or second unit area/s.

Preferably, at least one further performance measurement is received for at least one further set of parameters, and wherein the method is performed for each further set/s of parameters. Optionally, the at least one further performance measurement is/are identified as having been recorded in a unit area/s associated with the: first measurement; the second measurement; the first and the second measurements; or neither the first, nor the second measurements. Preferably, the complete cluster comprises at least one measurement for each set of parameters; and
Preferably, every unit area that is adjacent the first unit area is clustered with the first unit area. Alternatively, only a portion of the unit areas adjacent the first unit area are clustered to the first unit area.

Preferably, the step of clustering the first unit area with an adjacent unit area is performed only if that adjacent unit area is not already grouped as part of a complete cluster.

Preferably, the method further comprises the step of grouping as part of the second unit area an adjacent unit area so as to form a second cluster, and wherein the step of iteratively grouping the first unit area with an adjacent unit area is performed until the cluster is contiguous with the second unit area and the second cluster.

Optionally, the step of grouping the second unit area into the first cluster is performed if the first cluster and the second unit area are within a threshold distance. Optionally, said threshold distance is a separation of up to one unit area. Optionally, said threshold is dynamic, for example the threshold may be higher (i.e. a greater distance is acceptable) for areas of lower population density.

Optionally, the method further comprises the step of forming the complete cluster if the total area of the cluster is within a threshold total area.

Preferably, the step of clustering the first unit area with an adjacent unit area is performed if the first set of parameters and the second set of parameters are compatible. Optionally, compatibility is assessed by determining if the first set of parameters and the second set of parameters cause interference.

Preferably, a plurality of complete clusters are formed, and wherein each complete cluster is input into the optimisation function so as to identify a set of parameters for providing improved performance of the wireless access point for the area that corresponds to all of the complete cluster.

Optionally, the wireless telecommunications network is a: cellular wide area network; and/or a local area network.

Preferably, the method further comprises the step of configuring the wireless access point in dependence on the output of the optimisation function.

Optionally, the first set of parameters and the second set of parameters are associated with the same or different wireless access point/s. Optionally, the first set of parameters and the second set of parameters are associated with different antenna.

According to another aspect of the invention, there is provided an apparatus for assessing performance of a wireless telecommunications network, the wireless telecommunications network comprising at least one wireless access point, the system comprising: a processor configured to access an array corresponding to an area that is served by the at least one wireless access point, wherein said array is formed of a plurality of unit areas; a controller for configuring the at least one wireless access point according to: a first set of parameters; and a second set of parameters; a receiver for receiving: a first measurement of performance of the wireless network configured according to the first set of parameters; and a second measurement of performance of the wireless network configured according to the second set of parameters; wherein the processor is further configured to identify: a first unit area of the array in which the first measurement is performed; a second unit area of the array in which the first measurement is performed and that the second unit area is different to the first unit area; an absence of a measurement of performance of the wireless network configured according to the first set of parameters in the second unit area; an absence of a measurement of performance of the wireless network configured according to the second set of parameters at the first unit area; group as part of the first unit area an adjacent unit area so as to form a cluster, and iteratively performing said grouping until the cluster is adjacent the second unit area; group the second unit area into the cluster, thereby to form a complete cluster when the complete cluster comprises at least one measurement for the first and the second sets of parameters; and input the complete cluster into an optimisation function so as to identify a set of parameters for providing improved performance of the at least one wireless access point for the area that corresponds to the complete cluster.

The invention extends to any novel aspects or features described and/or illustrated herein. The invention extends to methods and/or apparatus substantially as herein described and/or as illustrated with reference to the accompanying drawings. The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory. Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

The invention extends to a method of assessing performance of a wireless network and an apparatus therefor as described herein and/or substantially as illustrated with reference to the accompanying drawings. The present invention is now described, purely by way of example, with reference to the accompanying diagrammatic drawings, in which:
Figure 1 shows a schematic diagram of a wireless telecommunications network;
Figures 2a, 2b, 2c and 2d show an array that corresponds to a radio access network of the telecommunications network; and
Figure 3 shows a method of processing FDT readings from the radio access network.

### Specific Description

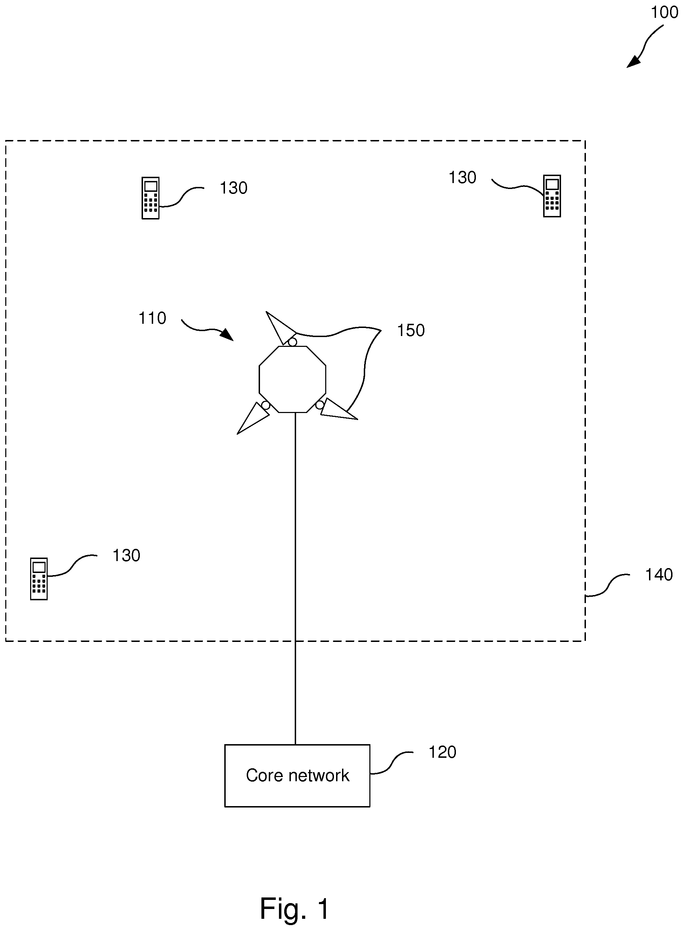

Figure 1 is a schematic of an exemplary wireless telecommunications network 100 comprising a radio access point 110 and a core network 120, which are interconnected. User Equipment (UE) 130 is configured to access the wireless telecommunications network 100 by communicating with the radio access point 110.

The radio access point 110 provides a radio access network within a geographic area 140, and the radio access point 110 is configurable so as to modify the performance of the radio access network, not least by configuring parameters associated with radio access point 110, and in particular of antennas 150 of the radio access point.

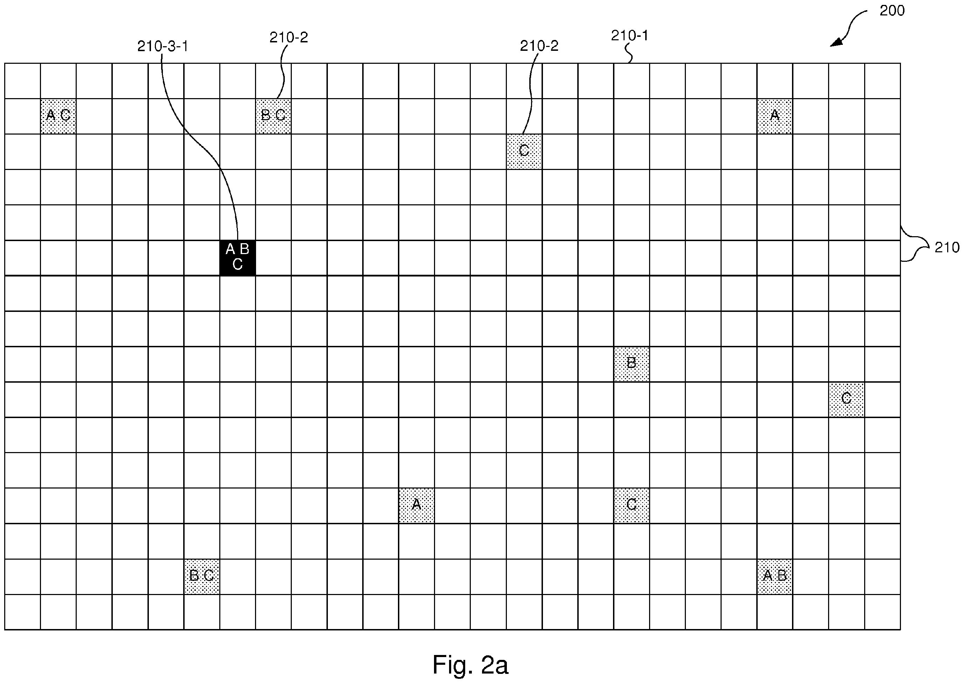

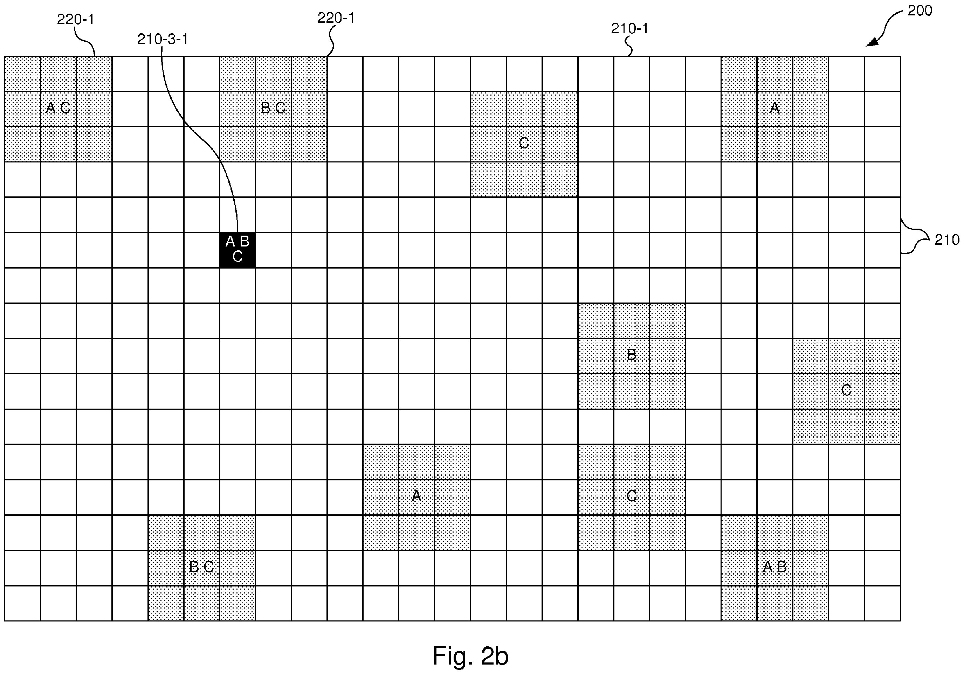

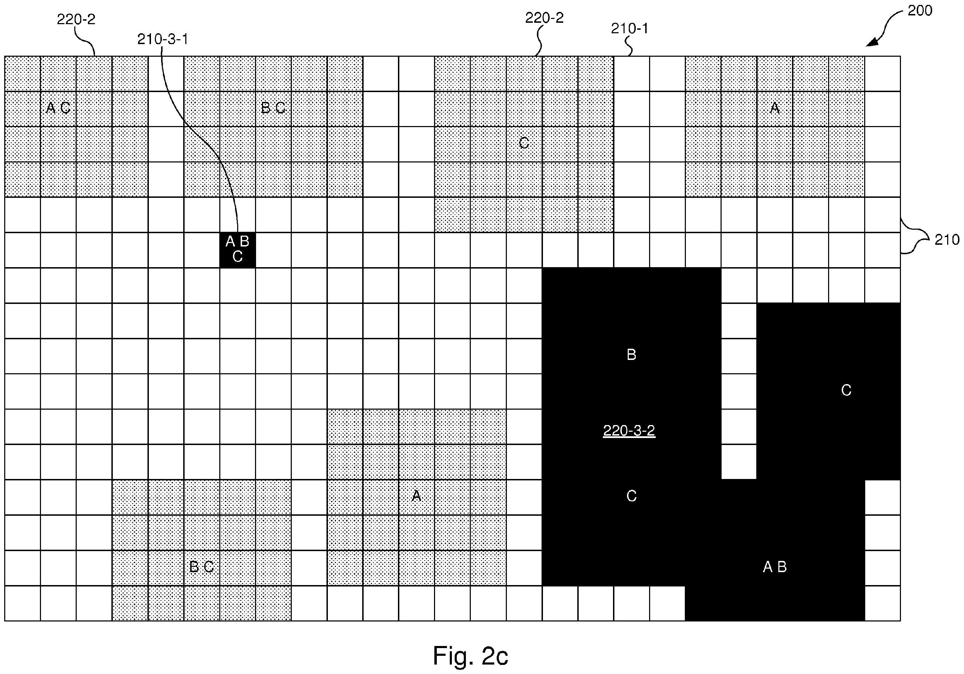

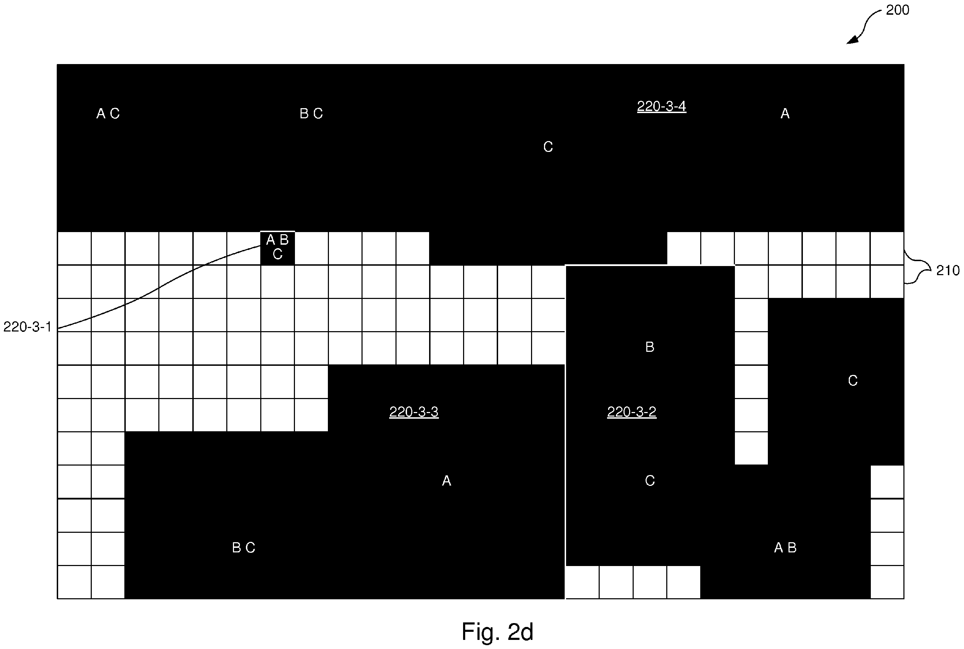

Figures 2 show an array 200 that corresponds to the area 140 served by the radio access point. The array 200 is formed of unit areas 210, and consists of 16 unit areas in length and 25 unit areas in width. For example, each unit area 210 corresponds to a 1m by 1m space in the area 140.

FDT performance measurements of the radio access point 110 serving the area 140 with which the array 200 is associated are recorded and attributed to the specific unit area in which the performance measurement was recorded.

In the example of Figure 2, FDT performance measurements are recorded for a set of three CCs of the radio access point 110; these three CCs are so-labelled configurations: 'A'; 'B'; and 'C'. Where a performance measurement is recorded within a given unit area for a given CC, a reading is generated for that CC in that unit area (in Figures 2, such readings are indicated by the labels 'A', 'B', or 'C', as appropriate).

Parameters that define a particular CC include antenna:
- geographic location;
- height;
- radiation pattern;
- azimuth and/or altitude (tilt) angles; and/or
- gain; and
- signal power.

It will be appreciated that many other parameters may also define a particular CC.

As best shown in Figure 2a, a given unit area 210 may be associated with: no readings for any CCs 210-1 *(i.e.* none of A, B and C); a reading/s associated with at least one, but not all, CCs 210-2 *(i.e.* at least one, but not all, of A, B and C); or with readings associated with all CCs 210-3 *(i.e.* all of A, B and C).

A unit area that has readings for all CCs 210-3 is referred to as being 'complete' *(i.e.* in the sense that it comprises a complete set of readings by having readings for all CCs). It will be appreciated that a completed unit area provides a fair, like-for-like, comparison of performance for each CC for that unit area (since there is substantially no special variance in readings across the set of CCs). Accordingly, such completed unit area are available to be processed as part of an optimisation function for determining, across the entire array, the optimal CC.

When performing a FDT for various CCs it is most desirable for every unit area to be completed; however, this is not typically achievable, not least given limited availability of resources.

Accordingly, clustering of readings over unit areas is performed so as better to represent readings over the entirety of the array.

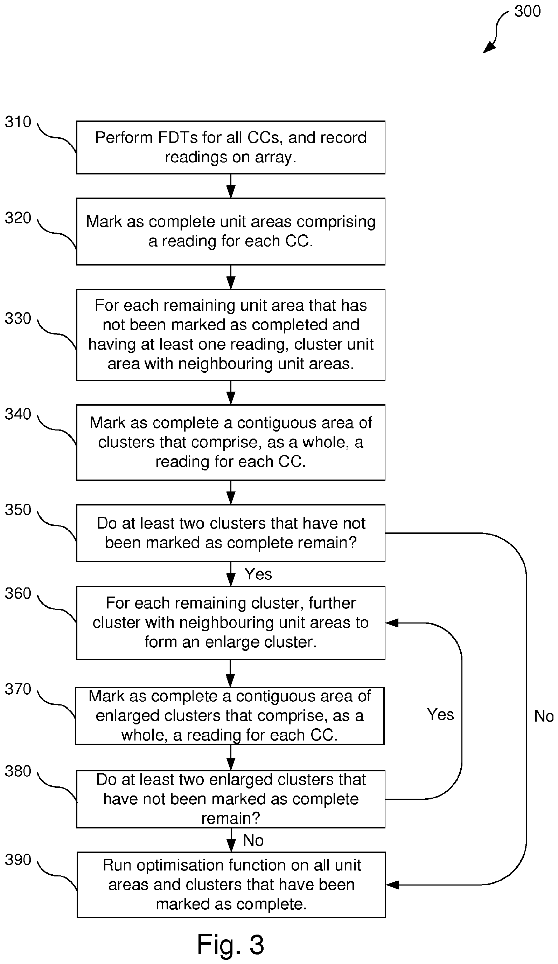

Figure 3 is a flow diagram of a process 300 for performing clustering of readings for a plurality of CCs, and Figures 2a to 2d illustrate clustering on array 200.

In a first step 310 according to process 300, a FDT is performed across the area of the array 200 for each CC that is to be assessed (e.g. CCs 'A', 'B' and 'C'), and the readings from the FDT are mapped to the array 200, as shown in Figure 2a.

In a next step 320, unit areas having a reading for all CCs 210-3 are marked as complete, as per unit area 210-3-1 in Figure 2a *(i.e.* since it has at least one reading for each of CCs 'A', 'B' and 'C').

Subsequently, at step 330, unit areas that have not yet been marked as complete, and which comprise a reading for at least one CC, but not for all CCs, 210-2, are clustered with their adjacent unit areas, thereby to form an enlarged area, herein referred to as a first cluster 220-1.The first cluster 220-1 is formed of up to 3 by 3 individual unit areas centred upon a unit area 210-2 from which the clustering emanated (which must therefore have a reading). Figure 2b represents the result of the implementation of step 330 to the array of Figure 2a.

In a next step 340, an assessment is made as to whether there are any first clusters 220-1 that now form a contiguous area that comprises - within the entire contiguous area - at least one reading for every CC (excluding any unit areas that have already been marked as complete); any such contiguous area is then, as a whole, marked as complete. In the example shown in Figure 2b, no first clusters 220-1 form a contiguous unit area that comprises at least one reading for every CC, and so no such first clusters can be marked as complete in this example.

In a next step 350, an assessment is made as to whether there remain any first clusters 220-1 that have not yet been marked as complete. In the example shown in Figure 2b, there remain ten such first clusters 220-1.

If, following step 350, any first clusters 220-1 that have not yet been marked as complete remain, then process 300 proceeds to step 360, in which case each such remaining first cluster 220-1 is further clustered with its adjacent unit areas, thereby forming a second (enlarged) cluster 220-2 that is formed of up to 5 by 5 unit areas centred upon the first cluster 210-1. Figure 2c illustrates the result of the implementation of step 360 upon the array shown in Figure 2b.

In a next step 370, in a corresponding manner to step 340, an assessment is made as to whether there are any second clusters 220-2 that now form a contiguous area that comprises at least one reading for every CCs; any such contiguous area is then, as a whole, marked as complete. In Figure 2c, as a result of step 370, a contiguous area 220-3-2 is formed of four second clusters 220-2 having, as a contiguous area, at least one reading for every CC; this contiguous area is therefore marked as complete.

In a corresponding manner to step 350, in a next step 380, an assessment is made as to whether there remain any second clusters 220-2 that have not yet been marked as complete. In the example shown in Figure 2c, there remain six such second clusters 220-2, following the contiguous area 220-3-2 being marked as complete.

If, following step 380, any second clusters 220-2 that have not yet been marked as complete remain, then process 300 reiterates to step 360 such that each remaining second cluster is further clustered with its adjacent unit areas, thereby forming, in a first re-iteration of step 360, a third cluster formed of up to 7 by 7 unit areas centred upon a second cluster 220-2. Figure 2d illustrates the results of the implementation of a first re-iteration of step 360 to the array shown in Figure 2c.

With reference to Figure 2d, following a first re-iteration of step 360, two contiguous areas 220-3-3, 220-3-4 are subsequently formed which comprise at least one reading for every CCs; these two contiguous areas are individually marked as complete in a re-iteration of step 370 that follows.

Steps 360 to 380 continue to reiterate until fewer than two clusters (of any size) that have not been marked as complete remain, in which case the process proceeds to step 390. The iterative cycle of steps 360 to 380 is also available to cease, and therefore to proceed to step 390 if: further iterations would not results in any new contiguous areas forming (e.g. because clusters are completely isolated from one another by a contiguous area marked as complete); and/or a threshold number of reiterations have been performed (say, five).

At step 390, an optimisation function (for example using a linear average of Reference Signal Received Power) is performed so as to identify the optimal CC for the array 200 based on a comparison of the readings for each CC for the unit areas and clusters that have been marked as complete. In particular, readings for a complete area are amalgamated together and taken to be representative of the entire complete area.

In one example, the optimisation process selects an optimal CC in dependence on measurements of the performance of the radio network, techno-economic metrics, and/or health and safety considerations (*e.g.* owing to signal power).

In one example, the array 200 over which process 300 is performed constitutes the entirety of a cell that forms part of the radio wireless telecommunications network 100. In another example, the array 200 is less than the entirety of a cell, wherein the process 300 is performed separately for several areas within a cell. In another example, the array 200 covers an area that corresponds to at least two cells or to parts of at least two cells.

Process 300 is available to be effected during different stages of radio link planning, including planning a network site with one or more access points, after installation of a new radio access point(s) and/or for re-evaluating a configuration of an existing radio access point(s).

Advantageously, process 300 improves clustering of readings from FDTs, so that like-for-like comparison may be performed for readings across CCs, and therefore yielding improved inputs for optimisation processes to identify optimal CCs for radio access points over an area having an incomplete set of readings from a FDT. In turn, improved optimisation may be achieved from a limited FDT, which results in lower operational expenditure for a MNO without substantial compromise in efficacy.

In one example, the performance measurements are recorded by the UEs, thereby reducing costs. The process described above is particularly suited to using UEs, which may be non-static and provide occasional - rather than constant - readings, which may in turn cause variation as to the number and position of readings over the range of CCs that are being assessed. The process described herein may help mitigate this variance by improving the manner in which readings subject to such variance are clustered.

In an alternative, clustering is performed when clusters are sufficiently proximate to one another (rather than contiguous). For example, clusters are available to merge when they are separated by up to one unit area, or by up to two unit areas.

In an alternative, the size up to which a unit area and/or a cluster is/are available to be increased and/or the size of a contiguous area that is available to be marked as complete is/are limited, and this limit (*i.e.* in terms of unit area) is dynamic, for example, such that rural areas have a higher limit than urban areas.

In yet another alternative, clusters are only allowed to form a contiguous area that is available to be marked as complete if the CC readings within the contiguous area are compatible with one another. For example, a contiguous area is not allowed to be completed, and clustering instead continues, if two sets of CC readings may not be compatible with one another (for example, due to inter/intra-frequency interference between CCs of the same or different access points, or due to techno-economic metrics such that deployment of two CCs incurs expenditure above a certain threshold).

In the foregoing description, the process described above is applied to a cellular wide area wireless telecommunications network. However, in an alternative, the process is applied to other wireless telecommunications networks, including local area networks such as a WiFi^{RTM} network, as well as Heterogeneous Networks ('HetNets') comprised of a combination of different radio access point types and radio access technologies.

It will be appreciated that the wireless telecommunications network 100 may comprise a plurality of radio access points 110. In a further example, a CC includes, not least, a selection of a particular radio access point or points 110 to serve a particular area. Accordingly, in one example, area 140 is served by at least two radio access point, and the different CCs assessed as part of FDTs include utilising these different radio access points. In this way, an optimal radio access point or an optimal selection of radio access points, and in turn its/their respective optimal configuration/s, may be identified.

In one example, a unit area or cluster is not expanded so as to be grouped with its adjacent unit areas if it conflicts with the expansion of another unit area or cluster since a contiguous area will be formed between the unit area/s and/or cluster/s regardless.

In the foregoing, the array comprises quantised unit areas of fixed dimensions (e.g. corresponding to an area of 1m by 1m), which is most appropriate when the area that is subject to a FDT is represented as a raster map. However, in an alternative example, the array is instead formed of a continuum of unit areas that may have infinitesimal dimensions; in this way, a cluster is available to be increased by any size, which is most appropriately applied when the area that is subject to a FDT is represented as a vector map.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of assessing performance of a wireless telecommunications network, the wireless telecommunications network comprising at least one wireless access point, the method comprising the steps of:
defining an array corresponding to an area that is served by the at least one wireless access point, wherein said array is formed of a plurality of unit areas;
configuring the at least one wireless access point according to a first set of parameters;
receiving a first measurement of performance of the wireless network configured according to the first set of parameters;
identifying a first unit area of the array in which the first measurement is performed;
configuring the at least one wireless access point according to a second set of parameters;
receiving a second measurement of performance of the wireless network configured according to the second set of parameters;
identifying a second unit area of the array in which the first measurement is performed, wherein the second unit area is different to the first unit area;
identifying an absence of a measurement of performance of the wireless network configured according to the first set of parameters in the second unit area;
identifying an absence of a measurement of performance of the wireless network configured according to the second set of parameters at the first unit area;
grouping the first unit area with an adjacent unit area so as to form a cluster, and iteratively performing said grouping until the cluster is contiguous with the second unit area;
grouping the second unit area with the cluster, thereby to form a complete cluster when the complete cluster comprises at least one measurement for the first and the second sets of parameters; and
inputting the complete cluster into an optimisation function so as to identify a set of parameters for providing improved performance of the at least one wireless access point for the area that corresponds to the complete cluster.

2. A method according to Claim 1, wherein a plurality of first measurements and/or second measurements are received, and wherein the method is performed for each of the first measurements and/or the second measurements.

3. A method according to Claim 1 or 2, wherein at least one further performance measurement is received for at least one further set of parameters, and wherein the method is performed for each further set/s of parameters.

4. A method according to any preceding claim, wherein every unit area that is adjacent the first unit area is clustered with the first unit area.

5. A method according to any preceding claim, wherein the step of clustering the first unit area with an adjacent unit area is performed only if that adjacent unit area is not already grouped with a complete cluster.

6. A method according to any preceding claim, further comprising the step of grouping as part of the second unit area an adjacent unit area so as to form a second cluster, and wherein the step of iteratively grouping the first unit area with an adjacent unit area is performed until the cluster is contiguous with the second unit area and the second cluster.

7. A method according to any preceding claim, wherein the step of grouping the second unit area into the first cluster is performed if the first cluster and the second unit area are within a threshold distance.

8. A method according to any preceding claim, further comprising the step of forming the complete cluster if the total area of the cluster is within a threshold total area.

9. A method according to any preceding claim, wherein the step of clustering the first unit area with an adjacent unit area is performed if the first set of parameters and the second set of parameters are compatible.

10. A method according to any preceding claim, wherein a plurality of complete clusters are formed, and wherein each complete cluster is input into the optimisation function so as to identify a set of parameters for providing improved performance of the wireless access point for the area that corresponds to all of the complete cluster.

11. A method according to any preceding claim, wherein the wireless telecommunications network is a: cellular wide area network; and/or a local area network.

12. A method according to any preceding claim, further comprising the step of configuring the wireless access point in dependence on the output of the optimisation function.

13. A method according to any preceding claim, wherein the first set of parameters and the second set of parameters are associated with the same or different wireless access point/s.

14. A method according to any preceding claim, wherein the first set of parameters and the second set of parameters are associated with different antenna.

15. An apparatus for assessing performance of a wireless telecommunications network, the wireless telecommunications network comprising at least one wireless access point, the system comprising:
a processor configured to access an array corresponding to an area that is served by the at least one wireless access point, wherein said array is formed of a plurality of unit areas;
a controller for configuring the at least one wireless access point according to:
a first set of parameters; and
a second set of parameters;
a receiver for receiving:
a first measurement of performance of the wireless network configured according to the first set of parameters; and
a second measurement of performance of the wireless network configured
according to the second set of parameters;
wherein the processor is further configured to identify:
a first unit area of the array in which the first measurement is performed;
a second unit area of the array in which the first measurement is performed and that the second unit area is different to the first unit area;
an absence of a measurement of performance of the wireless network configured according to the first set of parameters in the second unit area;
an absence of a measurement of performance of the wireless network configured according to the second set of parameters at the first unit area;
group as part of the first unit area an adjacent unit area so as to form a cluster, and iteratively performing said grouping until the cluster is adjacent the second unit area;
group the second unit area into the cluster, thereby to form a complete cluster when the complete cluster comprises at least one measurement for the first and the second sets of parameters; and
input the complete cluster into an optimisation function so as to identify a set of parameters for providing improved performance of the at least one wireless access point for the area that corresponds to the complete cluster.
